# EUROPÄISCHE PATENTSCHRIFT

(11) **EP 0 631 475 B1**
(45) Veröffentlichungstag und Bekanntmachung des Hinweises auf die Patenterteilung: **10.07.1996**
(21) Anmeldenummer: 93905081.1
(22) Anmeldetag: 16.03.1993
(51) Int. Cl.: A21C 1/00

(54) **VORRICHTUNG ZUM KNETEN VON TEIG**
DEVICE FOR KNEADING DOUGH
DISPOSITIF POUR PETRIR DE LA PATE

(30) Priorität: 16.03.1992 AT 528/92
(43) Veröffentlichungstag der Anmeldung: 04.01.1995
(73) Patentinhaber: König, Elisabeth, A-8045 Graz (AT)
(72) Erfinder: KÖNIG, Helmut, verstorben (DE)
(74) Vertreter: Wildhack, Helmut, Dipl.-Ing. Dr.
(86) Internationale Anmeldenummer: AT9300049
(87) Internationale Veröffentlichungsnummer: WO9318656

(56) Entgegenhaltungen:
- DE-C- 271 373
- FR-A- 359 123
- FR-A- 422 325
- FR-A- 430 804
- FR-A- 469 285

## Beschreibung

Die Erfindung bezieht sich auf eine Vorrichtung zum Kneten von Teig, mit einem Gestell, das einen Behälter für den Teig um eine vertikale Achse drehbar aufnimmt, mit einem Antrieb für diese Drehung und zumindest zwei Knetwerkzeugen mit stangenförmigen Grundkörpern, die von oben in den Behälter hineinragen und an ihren oberen Enden mit gegenläufig um horizontale Achsen umlaufenden Kurbelarmen sowie zwischen ihren Enden mit gelenkig mit dem Gestell verbundenen Lenkern gekuppelt sind, so daß das untere Ende jedes Knetwerkzeuges eine Knetbewegung mit in sich geschlossener Bewegungsbahn vollführt, und die Richtungen der beiden Kurbelarme abweichen von einer spiegelbildlichen Anordnung bezüglich einer mittig zwischen den beiden Kurbelarmen angeordneten Vertikalebene, so daß die Hub- und Senkbewegungen der beiden Knetwerkzeuge zu unterschiedlichen Zeiten erfolgen.

Bei einer gattungsfremden Vorrichtung zum Kneten von Teig (Prospekt "SANCASSIANO BTF 40:160") ist jedes Knetwerkzeug von einem Doppelhebel gebildet, dessen beide Teile miteinander einen stumpfen Winkel einschließen. An der Abkröpfungsstelle ist jeder Hebel drehbar und exzentrisch an einer Kreisscheibe gelagert, die um ihre mittige Achse angetrieben wird. Jeweils der eine Arm jedes Doppelhebels ragt in den Behälter hinein und bildet dort das eigentliche Knetwerkzeug. Zur Verbesserung der Einwirkung auf den Teig ist das eine Knetwerkzeug an seinem unteren Ende mit einem vom anderen Knetwerkzeug abgewendeten bogenförmig verlaufenden Quersteg versehen, während am unteren Ende des anderen Knetwerkzeuges ein U-förmig verlaufendes Querstück sitzt. Die oberen Hebelarme der beiden Doppelhebel sind an ihren Enden gelenkig miteinander verbunden. Dadurch wird erreicht, daß bei der gegenläufigen Drehung der beiden Kreisscheiben die beiden Knetwerkzeuge eine gleichzeitige Auf- und Abbewegung vollführen und zugleich aufeinander zu bzw. von einander weg verschwenkt werden. Die Anordnung ist so getroffen, daß in einer Grenzlage dieser Schwenkbewegung das U-förmige Querstück das andere Knetwerkzeug umgreift.

Untersuchungen haben gezeigt, daß mit einer derartigen Vorrichtung zwar eine befriedigende Mischung der mittig im Behälter liegenden Teigbestandteile erzielbar ist, daß jedoch die in den Randpartien des Behälters liegenden Teigbestandteile nicht so intensiv gemischt werden wie die übrigen Partien. Außerdem hat sich der Nachteil gezeigt, daß an den beiden Knetwerkzeugen Teigpartien hängen bleiben und ständig mit den Knetwerkzeugen mitbewegt und dadurch nicht genügend gemischt werden. Die Folge ist eine inhomogene Teigqualität, was Schwierigkeiten bei der Weiterverarbeitung des Teiges mit sich bringt.

Eine Vorrichtung der eingangs geschilderten Art ist aus der FR-A 430 804 bekannt. Dort ist jeder Kurbelarm mit einer vertikalen Stange gelenkig verbunden, deren oberes Ende gelenkig an einem Schwenkhebel befestigt ist, der eine im Gestell drehbar gelagerte horizontale Welle verdreht. Diese Welle verschwenkt einen weiteren Schwenkhebel, der mit dem oberen Ende des Grundkörpers des Knetwerkzeuges gelenkig verbunden ist. Etwa in der Mitte der Länge jedes Grundkörpers ist dieser an einem Lenker angelenkt, der schwenkbar am Gestell befestigt ist, wobei die Schwenkstellen mit den Drehachsen der Kurbelarme zusammenfallen. Beide Schwenkhebel weisen nach derselben Seite. Hiedurch ergeben sich zwei Knetwerkzeuge, welche zwar relativ zueinander eine Auf- und Abbewegung vollführen, jedoch mit ihren Bewegungsbahnen räumlich voneinander getrennt sind. Hiedurch ergibt sich eine nur ungenügende Durcharbeitung des Teiges, abgesehen vom beträchtlichen Aufwand, welcher für die Bewegung der Knetwerkzeuge erforderlich ist und energieverzehrend wirkt.

Die Erfindung setzt sich zur Aufgabe, eine Vorrichtung der eingangs geschilderten Art so zu verbessern, daß die Mischung der Teigbestandteile durch intensive Knetung des Teiges verbessert wird, so daß eine homogene Teigqualität erzeugt wird. Hiebei soll dies mit geringem Aufwand und mit einer übersichtlichen, störungsunanfälligen Konstruktion erzielt werden. Die Erfindung löst diese Aufgabe - ausgehend von der eingangs geschilderten Konstruktion - dadurch, daß bei jedem Knetwerkzeug der zugehörige Kurbelarm unmittelbar am oberen Ende des Grundkörpers angelenkt ist und daß die beiden Lenker von ihren Anlenkstellen an den Grundkörpern jeweils nach außen zu der jeweiligen Anlenkstelle am Gelenk führen, so daß die Bewegungsbahnen der unteren Enden der beiden Knetwerkzeuge einander, in Richtung der horizontalen Achsen gesehen, überlappen. Die beiden Knetwerkzeuge bewegen sich daher nicht spiegelbildlich in Bezug auf eine zwischen ihnen befindliche Vertikalebene. Vielmehr hat die erfindungsgemäße Art der Ankupplung der beiden Knetwerkzeuge an ihrem Antrieb zur Folge, daß sich über Teile des Bewegungszylus jedes Knetwerkzeuges eine Aufwärtsbewegung des einen Knetwerkzeuges und eine Abwärtsbewegung des anderen Knetwerkzeuges ergibt. Die Knetwerkzeuge haben daher - über ihren Bewegungszyklus gesehen - nicht nur Bewegungskomponenten, welche in horizontaler Richtung aufeinander zu bzw. voneinander weg gerichtet sind, sondern auch in vertikaler Richtung. Dies führt dazu, daß jeweils das eine Knetwerkzeug vom anderen Knetwerkzeug Teig abstreift, welcher an diesem anderen Knetwerkzeug anhaftet. Der abgestreifte Teig gelangt wieder in den Bereich der Knetwerkzeuge und wird wiederum bearbeitet, wie die anderen Teigpartien auch. Dadurch wird bereits der Mischeffekt auf die Teigbestandteile (Wasser, Mehl, allfällige Zusätze bzw. Backhilfsmittel usw.) verbessert.

Die beschriebene Kupplungsart hat aber auch den Vorteil, daß die unteren Enden der Knetwerkzeuge, welche zweckmäßig in bekannter Weise mit Schaufeln od.dgl. versehen sind, so bewegt werden, daß die händische Teigrührbewegung nachgeahmt wird. Das untere Ende jedes Knetwerkzeuges vollführt dann eine Bewegung, welche vom Zentrum des Bodenbereiches des Behälters zum Rand desselben führt, aufsteigt, die Wand wieder verläßt und wieder zurück zum Zentrum des Behälters führt. Durch die gegenseitige Überlappung der beiden Bewegungsbahnen werden alle Teigpartien erfaßt und beim Kneten wird der Effekt erzielt, daß der Teig an die Außenwand des Behälters (Knetschale) mit Energie aufgeschlagen wird, so, wie dies beim händischen Teigrühren mit Hilfe eines Kochlöffels der Fall ist. Durch die beiden Effekte ergibt sich im Vergleich zu den eingangs beschriebenen bekannten Vorrichtungen ein wesentlich gesteigerter Mischeffekt.

Besonders zweckmäßig ist eine Weiterbildung der Erfindung, gemäß welcher die beiden Kurbelarme relativ zu einer symmetrischen Anordnung in Bezug auf die Vertikalebene um 70 bis 110°, vorzugsweise um 90° gegeneinander versetzt sind. Diese Versetzungswerte haben sich in der Praxis als besonders günstig erwiesen und bringen einen hohen Abstreifeffekt auf den Teig. Der Bewegungsablauf des unteren Endes des Knetwerkzeuges läßt sich variieren, wenn gemäß einer Weiterbildung der Erfindung die Anlenkstelle des Lenkers am Knetwerkzeug und bzw. oder am Gestell verstellbar ist. Gegebenenfalls kann auch die Anlenkstelle des Knetwerkzeuges an der Kurbel verstellbar sein. Auf diese Weise läßt sich der für den gewünschten Effekt jeweils günstigste Bewegungszyklus des Knetwerkzeuges einstellen, auch, wenn von einer Behältergröße auf eine andere Größe übergegangen werden muß.

Wie bereits erwähnt, sind die unteren Enden der Knetwerkzeuge mit Schaufeln od. dgl. versehen. Gemäß der Erfindung ist hiebei die Anordnung so getroffen, daß jedes Knetwerkzeug an seinem unteren Ende eine von einem Querstück gebildete Schaufel trägt, die sich von der Längserstreckung des Knetwerkzeuges einseitig normal zu dieser Längserstreckung weg erstreckt, wobei die Schaufeln gleichgerichtet sind. Vorzugsweise laufen die Knetwerkzeuge auch in der gleichen Ebene um, obwohl es durchaus möglich wäre, die beiden Knetwerkzeuge etwas - gesehen in Längsrichtung jeder Schaufel - etwas relativ zueinander zu versetzen. Die Schaufeln beschreiben dann bei zweckmäßiger Anordnung die eingangs beschriebene Bewegungsbahn, welche den händischen, mittels eines Kochlöffels od.dgl. durchgeführten Rühr- bzw. Kneteffekt nachahmt.

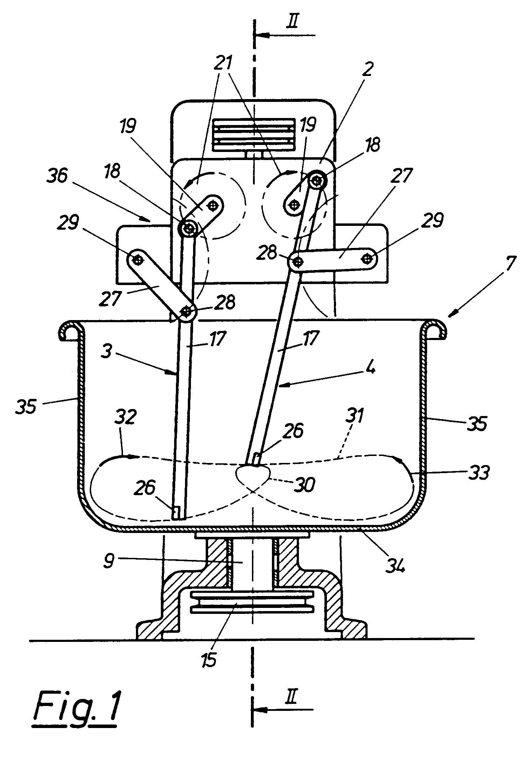

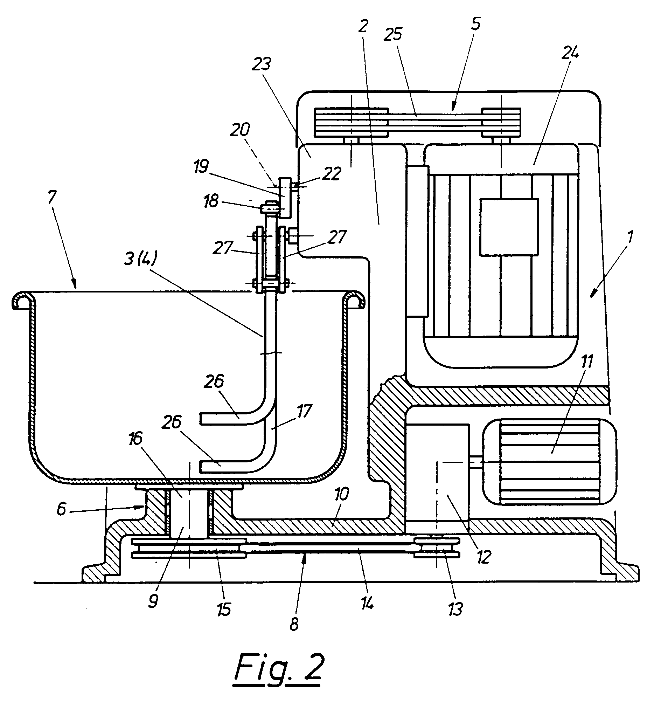

In der Zeichnung ist der Erfindungsgegenstand anhand eines Ausführungsbeispieles schematisch dargestellt. Fig.1 zeigt einen durch die Behältermitte geführten Vertikalschnitt durch die Vorrichtung. Fig.2 ist ein Schnitt der II - II der Fig. 1.

Das Gestell 1 der Vorrichtung hat einen Ständer 2 für die Halterung zweier Knetwerkzeuge 3,4 und für den Antrieb 5 derselben. Weiters hat das Gestell 1 eine Aufnahme 6 für den Behälter 7 für den zu mischenden bzw. knetenden Teig, und weiters einen Antrieb 8 zur Drehung dieses Behälters 7 um eine vertikale Achse 9. Der Antrieb 8 ist hiebei in einer hohlen Bodenplatte 10 des Gestelles 1 untergebracht und umfaßt einen Motor 11, der über ein Getriebe 12 ein Kettenrad 13 antreibt, das mittels einer Kette 14 mit einem weiteren Kettenrad 15 verbunden ist, das eine in der Bodenplatte 10 drehbar gelagerte Welle 16 antreibt, die mit dem Behälter 7 drehschlüssig verbunden ist. Zweckmäßig ist diese Verbindung als lösbare Kupplung ausgebildet, damit der Behälter 7 vom Gestell 1 gelöst werden kann.

Die beiden Knetwerkzeuge 3,4 ragen von oben in den topfförmigen Behälter 7 hinein. Jedes Knetwerkzeug 3 hat einen Grundkörper 17 in Form einer geraden Stange, die an ihrem oberen Ende mittels eines Zapfens 18 an einem Kurbelarm 19 angelenkt ist, der um eine horizontale Achse 20 umläuft. Die beiden Achsen 20 der beiden Kurbelarme 19 liegen parallel zueinander in einem derartigen Abstand, daß sich die gegensinnig in Richtung der Pfeile 21 umlaufenden Kurbelarme 19 nicht behindern. Jeder Kurbelarm 19 sitzt auf einer Kurbelwelle 22. Die beiden Kurbelwellen 22 werden über ein Getriebe vom Antrieb 5 angetrieben, welcher einen Motor 24 und einen davon angetriebenen Keilriementrieb 25 hat.

Am unteren Ende jedes Knetwerkzeuges 3,4 sitzt eine Schaufel 26, die aus einer länglichen Platte besteht, deren Längserstreckung normal zur Längserstreckung des Grundkörpers 17 gerichtet ist. Beide Schaufeln 26 weisen vom jeweiligen Grundkörper 17 nach derselben Seite. Zwischen den Schaufeln 26 und den Zapfen 18 ist jeder Grundkörper 17, vorzugsweise im Bereiche des mittleren Drittels seiner Länge, mittels eines Lenkers 27 gelenkig mit dem Ständer 2 des Gestelles 1 verbunden. Die Anlenkstellen 28 bzw. 29 jedes Lenkers 27 am Grundkörper 17 bzw. am Ständer 2 können ebenso wie die Anlenkstellen der Grundkörper 17 den Kurbelarmen 19 verstellbar sein, um die Höhenlage bzw. Winkellage der Knetarme 3,4 nach Wunsch einstellen zu können. Zweckmäßig sind die Lenker 27 als Doppellenker ausgebildet, die beidseitig am Knetwerkzeug 3 bzw. 4 anliegen. Diese beiden Knetwerkzeuge 3,4 bewegen sich in derselben Ebene, jeder Knetarm vollführt mit seiner Schaufel 26 eine in sich geschlossene Bewegungsbahn. Die beiden Bahnen sind in Fig.1 mit strichlierten Linien 30 bzw. 31 angedeutet, die Umlaufrichtungen mit den Pfeilen 32 bzw. 33. Wie aus Fig.1 ersichtlich ist, überlappen sich die beiden Umlaufbahnen 30 bzw. 31, normal zur Ebene gesehen, in welcher diese Umlaufbahnen verlaufen. Jede dieser Bewegungsbahnen 30,31 verläuft von der Mitte des Behälters 7 entlang des Bodens 34 desselben nach außen zur Seitenwand 35, steigt entlang dieser hoch und kehrt dann wieder zur Behältermitte zurück, in deren Bereich die Abwärtsbewegung bis zum Boden 34 erfolgt. Dadurch wird der Teig mittels der Schaufeln 26 an die Seitenwand angeschleudert bzw. angedrückt und auf diese Weise ein händischer Knetvorgang nachgeahmt. Beide Knetwerkzeuge 3,4 laufen jedoch nicht gleichzeitig nach oben bzw. nach unten, sondern gegeneinander phasenversetzt, was durch Versetzung der Richtungen der Kurbelarme 19 erzielt wird. Wie Fig.1 zeigt, sind die beiden Kurbelarme 19 relativ zueinander in Bezug auf eine mittig zwischen ihnen verlaufende Symmetrieebene um etwa 90° versetzt. Damit wird erreicht, daß jeweils der eine Knetarm 3 den Teig vom anderen Knetarm abstreift bzw. umgekehrt. Dies alles wird durch die Führung 36 erreicht, welche von den Lenkern 27 gebildet ist und zusammen mit der Umlaufbewegung der Kurbelarme 19 die erwähnte Bewegung der Knetwerkzeuge 3,4 hervorruft. Die Umlaufrichtungen 21 der Kurbelarme 19 sind hiebei derart gewählt, daß die absteigenden Umlaufteile der Kurbeln 19 außen liegen und die aufsteigenden Umlaufteile innen. Dadurch wird die Auswärtsbewegung der Schaufeln 26 im Bereich des Bodens 34 des Behälters 7 gesichert. Durch entsprechende Anordnung der Gelenkstellen, welche auf die Bewegung dere Knetwerkzeuge 3,4 Einfluß nehmen, läßt sich jede gewünschte Bewegungsbahn 30,31 erzielen und dadurch nach Wunsch einstellen.

Gegebenenfalls könnten auch mehr als zwei Knetwerkzeuge vorhanden sein. Es wäre z.B. möglich, das Knetwerkzeugpaar 3,4 mehr von der Achse 9 des Behälters 17 nach außen herauszurücken, als dies Fig.2 zeigt. Für die linke Hälfte des Behälters 7 könnte dann ein weiteres Paar von Knetwerkzeugen 3 angeordnet werden. Es wäre auch denkbar, ein zusätzliches Knetwerkzeugpaar vorzusehen, dessen Bewegung in einer Ebene erfolgt, die normal steht auf die Bewegungsebene der beiden Knetwerkzeuge 3,4, wobei jedoch Bedacht darauf zu nehmen ist, daß die Knetwerkzeuge nicht miteinander kollidieren.

Wie bereits erwähnt ist die Erfindung auch anwendbar auf solche Vorrichtungen, bei denen der Behälter 7 vom Gestell 1 trennbar ist. Zweckmäßig ist eine Ausführungsform mit in das Gestell 1 einfahrbarem Behälter. Hiezu müßte lediglich das Gestell 1 im Bereich der Bodenplatte 10 mit einer entsprechend ausgebildeten Aufnahme 6 versehen sein, in welche ein Mitnahmeorgan, z.B. ein Zahnrad, für den Drehantrieb des fahrbar ausgebildeten Behälters hineinragt. Damit die Werkzeuge 3,4 beim Ein- bzw. Ausfahren des Behälters nicht hinderlich sind, ist es in einem solchen Fall zweckmäßig, den Ständer 2 anhebbar auszubilden, z.B. mittels einer Teleskopführung, sodaß die unteren Enden der Werkzeuge 3,4 in eine Höhe gelangen, die das problemlose Ein- bzw. Ausfahren des Behälters 7 ermöglicht.

## Patentansprüche

1. Vorrichtung zum Kneten von Teig, mit einem Gestell (1), das einen Behälter (7) für den Teig um eine vertikale Achse (9) drehbar aufnimmt, mit einem Antrieb (8) für diese Drehung und mit zumindest zwei Knetwerkzeugen (3,4) mit stangenförmigen Grundkörpern (17), die von oben in den Behälter (7) hineinragen und an ihren oberen Enden mit gegenläufig um horizontale Achsen (20) umlaufenden Kurbelarmen (19) sowie zwischen ihren Enden mit gelenkig mit dem Gestell (1) verbundenen Lenkern (27) gekuppelt sind, so daß das untere Ende jedes Knetwerkzeuges (3,4) eine Knetbewegung mit in sich geschlossener Bewegungsbahn vollführt und die Richtungen der beiden Kurbelarme (19) abweichen von einer spiegelbildlichen Anordnung bezüglich einer mittig zwischen den beiden Kurbelarmen (19) angeordneten vertikalen Ebene, so daß die Hub- und Senkbewegungen der beiden Knetwerkzeuge (3,4) zu unterschiedlichen Zeiten erfolgen, dadurch gekennzeichnet, daß bei jedem Knetwerkzeug (3,4) der zugehörige Kurbelarm (19) unmittelbar am oberen Ende des Grundkörpers (17) angelenkt ist und daß die beiden Lenker (27) von ihren Anlenkstellen an den Grundkörpern (17) jeweils nach außen zu der jeweiligen Anlenkstelle (29) am Gestell (1) führen, so daß die Bewegungsbahnen der unteren Enden der beiden Knetwerkzeuge (3,4) einander, in Richtung der horizontalen Achsen (20) gesehen, überlappen.

2. Vorrichtung nach Anspruch 1, dadurch gekennzeichnet, daß die beiden Kurbelarme (19) relativ zu der symmetrischen Anordnung in Bezug auf die Vertikalebene um 70 bis 110°, vorzugsweise um 90°, gegeneinander versetzt sind.

3. Vorrichtung nach Anspruch 1 oder 2, dadurch gekennzeichnet, daß jeder Lenker (27) an seinem Knetwerkzeug (3,4) im Bereich des mittleren Drittels des Grundkörpers (17) angelenkt ist.

4. Vorrichtung nach einem der Ansprüche 1 bis 3, dadurch gekennzeichnet, daß die Anlenkstellen (28 bzw. 29) des Lenkers (27) am Knetwerkzeug (3 bzw. 4) und bzw. oder am Gestell (1) und bzw. oder die Anlenkstelle (18) des Knetwerkzeuges (3 bzw.4) am Kurbelarm (19) verstellbar sind.

5. Vorrichtung nach einem der Ansprüche 1 bis 4, dadurch gekennzeichnet, daß jedes Knetwerkzeug (3,4) an seinem unteren Ende eine von einem Querstück gebildete Schaufel (26) trägt, die sich von der Längserstreckung des Knetwerkzeuges (3,4) einseitig normal zu seiner Längserstreckung weg erstreckt, wobei die Schaufeln (26) gleich gerichtet sind.

6. Vorrichtung nach Anspruch 5, dadurch gekennzeichnet, daß die beiden Knetwerkzeuge (3,4) in der gleichen Ebene umlaufen.

7. Vorrichtung nach Anspruch 5 oder 6, dadurch gekennzeichnet, daß die Bewegungsbahn (30,31) jeder Schaufel (26) vom Mittelbereich des Behälters (7) nach unten zu dessen Boden (34) verläuft, sodann entlang des Bodens (34) bis zur Seitenwand (35) des Behälters und entlang dieser aufsteigend und schließlich wieder zurück zum Mittelbereich des Behälters (7).

8. Vorrichtung nach einem der Ansprüche 1 bis 7, dadurch gekennzeichnet, daß die Lenker (27) Doppellenker sind, die beidseitig am Knetwerkzeug (3 bzw.4) anliegen.

## Claims

1. Apparatus for kneading dough, comprising a support (1) receiving a container (7) for the dough to be rotatable about a vertical axis (9), drive means (8) for such rotation, and at least two kneading tools (3,4) having rod-shaped basic bodies (17) which protrude into the container (7) from above and which are coupled at their upper ends with crank arms (44) rotating about horizontal axes (20) in opposite directions and in-between their ends with guide rod means (27) pivotally connected to the support (1) so that the lower end of each kneading tool (3,4) carries out a kneading movement with a closed trajectory of motion and the directions of both crank arms deviate from a mirror-inverted arrangement with respect to a vertical plane located centrally between the two crank arms (19) so that the lifting and lowering movements of both kneading tools (3,4) are effected at different times, characterized in that at each kneading tool (3,4), the assigned crank arm (19) is directly pivoted at the upper end of the basic body (17), and that the two guide rod means (27) respectively extend outwards from their pivoting points on the basic bodies (17) to the respective pivoting point (29) on the support (1) so that the trajectories of motion of the lower ends of the two kneading tools (3,4) overlap each other when seen in the direction of the horizontal axes (20).

2. Apparatus as claimed in claim 1, characterized in that the two crank arms (19) are mutually offset by 70 to 110°, preferably by 90°, relatively to the symmetrical arrangement with respect to the vertical plane.

3. Apparatus as claimed in claim 1 or 2, characterized in that each guide rod means (27) is pivoted at its kneading tool (3,4) within the range of the middle third of the basic body (17).

4. Apparatus as claimed in any of claims 1 to 3, characterized in that the pivoting points (28 or 29) of the guide rod means (27) on the kneading tool (3 or 4) and/or on the support (1) and/or the pivoting point (18) of the kneading tool (3 or 4) on the crank arm (19) are adjustable.

5. Apparatus as claimed in any of claim 1 to 4, characterized in that each kneading tool (3,4) supports a blade (26) formed by a transverse part at its lower end, said blade extending unilaterally away from the longitudinal reach of the kneading tool (3,4) in perpendicular direction to its longitudinal reach, said blades (26) being oriented in the same direction.

6. Apparatus as claimed in claim 5, characterized in that the two kneading tools (3,4) circulate within the same plane.

7. Apparatus as claimed in claim 5 or 6, characterized in that the trajectory of motion (30,31) of each blade (26) extends from the centre region of the container (7) downwards to its bottom (34), then along the bottom (34) up to the lateral wall (35) of the container and rising along the same, and eventually back again to the centre region of the container (7).

8. Apparatus as claimed in any of claims 1 to 7, characterized in that the guide rod means (27) are double guide rods engaging both sides of the kneading tool (3 or 4).

## Revendications

1. Dispositif pour le pétrissage de la pâte, comprenant un bâti (1), qui reçoit un récipient (7) pour la pâte rotatif autour d'une axe (9) verticale, et un moyen d'entraînement (8) pour cette rotation ainsi qu'au moins deux outils de pétrissage (3,4) ayant des corps de base (17) en forme de barres, qui plongent de haut dans le récipient (7) et qui sont accouplés à ses extrémités supérieures à deux bras de manivelles (19) entraînées en sens inverse autour des axes horizontaux (20) et, entre ses extrémités, aux bras oscillants (27) reliés de manière pivotante au bâti, de manière que l'extrémité basse de chaque outil de pétrissage (3,4) exerce un mouvement de pétrissage avec une trajectoire de mouvement sans fin et que les sens des deux bras de manivelles (19) diffèrent d'une disposition inversé par rapport à un plan vertical situé au centre entre les deux bras de manivelles (19), de manière que les mouvements de levage et d'abaissement des deux outils de pétrissage (3,4) ont lieu aux temps différents, caractérisé en ce que le bras de manivelle (19) respectif de chaque outil de pétrissage (3,4) est articulée directement à l'extrémité supérieure du corps de base (17), et que les deux bras oscillants (27) s'étendent respectivement de ses points d'articulation aux corps de base (17) à l'extérieur au point d'articulation (29) respectif au bâti (1), de manière que les trajectoires de mouvement des extrémités basses des deux outils de pétrissage (3,4), vus en direction des axes horizontaux (20), recouvrent l'un à l'autre.

2. Dispositif selon la revendication 1, caractérisé en ce que les deux bras de manivelles (19) sont décalées de 70 à 110°, de préférence de 90°, l'un envers l'autre relativement à la disposition symétrique par rapport au plan vertical.

3. Dispositif selon la revendication 1 ou 2, caractérisé en ce que chaque bras oscillant (27) est articulé à son outil de pétrissage (3,4) au région du tiers moyen du corps de base (17).

4. Dispositif selon l'une des revendications 1 à 3, caractérisé en ce que les points d'articulation (28 ou 29) du bras oscillant (27) à l'outil de pétrissage (3 ou 4) et/ou au bâti (1) et/ou le point d'articulation (18) de l'outil de pétrissage (3 ou 4) au bras de manivelle (19) sont ajustables.

5. Dispositif selon l'une des revendications 1 à 4, caractérisé en ce que chaque outil de pétrissage (3,4) porte une pale (26) formée par une pièce transversale à l'extrémité basse, qui s'étend unilatéralement de la direction longitudinale de l'outil de pétrissage (3,4) normalement à cette direction longitudinale, les pales étant orientées dans la même direction.

6. Dispositif selon la revendication 5, caractérisé en ce que les deux outils de pétrissage (3,4) circulent dans le même plan.

7. Dispositif selon la revendication 5 ou 6, caractérisé en ce que le trajectoire de mouvement (30,31) de chaque pale (26) s'étend de la région médiane du récipient (7) en bas vers le fond (34) de celui-ci, puis le long du fond (34) jusqu'à la paroi latérale (35) du récipient et en montant le long de laquelle, et finalement retour à la région médiane du récipient (7).

8. Dispositif selon l'une des revendications 1 à 7, caractérisé en ce que les bras oscillants (27) sont des bras oscillants double, qui aboutissent aux deux côtés de l'outil de pétrissage (3,4) respectif.
